# EUROPEAN PATENT SPECIFICATION

(11) **EP 2 662 656 B1**
(45) Date of publication and mention of the grant of the patent: **29.04.2015**
(21) Application number: 13460025.3
(22) Date of filing: 29.04.2013
(51) Int. Cl.: F28F 9/16, F28F 9/14, F28D 1/053, F28F 21/08, B23P 11/02, B23P 15/26

(54) **Method of construction of a radiator**
Verfahren zur Konstruktion eines Heizkörpers
Procédé de construction de radiateur

(30) Priority: 07.05.2012 PL 39910412; 26.03.2013 PL 40330513
(43) Date of publication of application: 13.11.2013
(73) Proprietor: Wójcik, Janusz, 43-512 Bestwina (PL); Wójcik, Marek, 43-512 Bestwina (PL); Wójcik, Pawel, 31-318 Kraków (PL)
(72) Inventor: Wójcik, Janusz, 43-512 Bestwina (PL); Wójcik, Marek, 43-512 Bestwina (PL); Wójcik, Pawel, 31-318 Kraków (PL)
(74) Representative: Rygiel, Andrzej

(56) References cited:
- EP-A1- 0 564 422
- EP-A1- 0 727 633
- WO-A1-95/01543
- DE-A1- 19 823 635
- DE-C1- 19 619 129
- US-A- 4 573 248

## Description

The subject of the invention is the method of construction of a radiator, especially a bathroom one, preferably from aluminium and aluminium alloys.

In the majority of known radiators, especially bathroom ones, horizontal heating elements are joined with vertical collectors with the use of welded and soldered connections.

There is a known method of joining elements made from aluminium and aluminium alloys with the use of shrink connections. Such a method is presented in the patent PL 170254, it describes the method of execution of a shrink connection of an artillery gun barrel with heated jacket consisting in that the jacket is placed in a tank with liquid warmed in the temperature range 353°C to 673°C and is kept in this temperature from 5 to 120 min. Then the barrel is lowered into the jacket opening and a screw plug is screwed into the top flange of the jacket, and after cooling the paired jacket with the barrel is disconnected from the tank.

From the application PL 396172 which shows the closest prior art there is known a method of construction of the bathroom radiator from aluminium or aluminium alloys with the use of a fixed connection, consisting in simultaneous heating of vertical collectors to the temperature of 100 °C to 250 °C and cooling of horizontal heating elements to the temperature of - 78.5 ° C within the same time, whereby joining of horizontal heating elements with vertical collectors occurs. This method allows to obtain a permanent connection.

The essence of the shrink connection was also widely described in the article "Underestimated Shrink Connection" in a monthly magazine "Projektowanie i konstrukcje inzynierskie" [Designing and Engineering Constructions] No. 9/2009; apart from technical clarification of the discussed method of connecting, the author presents advantages and potential of its application in various fields of technology.

The assembly of such a connection consists in changing the temperature of one or both installed elements in order to obtain a sufficient assembling clearance. After the temperatures are levelled, a correctly designed connection is considered inseparable and with its properties it corresponds to a monolithic part. The most complex operation accompanying the assembly of such a connection is not, as it would seem, the physical operation of assembly, but previous selection of dimensional parameters of joined elements, with their physical properties together with determination of the heating and cooling temperature of joined elements taken into consideration.

The essence of the invention is that collectors with openings, preferably horizontal, are heated to the temperatures from 250°C to 600°C, and heating elements, preferably vertical, are cooled in the temperature range from -78.5°C to -195.8°C, whereas the end of heating of the collectors is at the same time the end of cooling of the heating elements, and the temperature difference of collectors heating and heating elements cooling amounts at least to 328°C; then, the heating elements, preferably vertical, are joined with collectors, preferably horizontal, and left for the temperature of the joined elements to level.
The collectors prior to heating and the heating elements prior to cooling are subjected to surface treatment through anodizing.
Cooling of heating elements is conducted in the liquid gas environment, preferably liquid nitrogen, for at least 2 seconds. The assembled radiator is subjected to surface treatment through anodizing.

The method of construction of the radiator, especially a bathroom one, from aluminium and aluminium alloys according to the invention, owing to the application of the shrink connection at joining vertical heating elements with horizontal collectors allows to eliminate additional weld connecting the elements, thus positively influencing visual appearance of the finished product. The aluminium radiator constructed in this way is also characterized by a uniform finishing coat after the anodizing surface treatment. Preliminary anodizing of horizontal collectors and vertical heating elements prior to their heating and cooling improves esthetical properties as well as eliminates creation of oxides during heating and cooling.

The method of construction of the radiator is presented in the embodiments.

### Example: Embodiment I

In horizontal collectors with the cross section in the shape of a closed profile, openings of the diameter "d1" are linearly milled along one of the planes, vertical heating elements being closed profiles are at opposite ends bored at the length "L1" to the dimension of the external diameter "d2" in such a way that d2> d1, and then bevelled at the length "L2" in such a way that L2< L1. Two horizontal collectors are placed in separate furnaces in a parallel manner in such a way that axes of the openings milled in them are parallel to the level; these furnaces are located in a parallel manner at both sides of the assembly table in such a way that the axes of the openings in both collectors are aligned. Then, the collectors are heated to the temperature of 250°C within 30 minutes. Between the furnaces and laterally to them, vertical heating elements are installed on the assembly table perpendicularly to the collectors in the furnaces and collinearly to the axes of the openings milled in them. Heating elements are cooled with liquid nitrogen within 2 to 10 seconds to the temperature of -78.5°C. The horizontal collectors and vertical heating elements thus prepared are joined with the uniform motion of synchronized pneumatic cylinders, which move the heated collectors synchronously to each other and along the vertical heating elements. The constructed radiator is left to slowly cool down to the ambient temperature. The final finishing stage is subjecting the finished radiator to surface treatment by anodizing.

### Example: Embodiment II

In horizontal collectors of the cross section in the shape of a closed profile, openings of the diameter "d1" are linearly milled in one plane in even spaces. Vertical heating elements being closed profiles are at opposite ends bored at the length "L1" to the dimension of the external diameter "d2" in such a way that d2> d1, and then bevelled at the length of "L2" in such a way that L2< L1. Two horizontal collectors are placed in separate furnaces in a parallel manner in such a way that the axes of openings milled in them are parallel to the level; these furnaces are located in a parallel manner at both sides of the assembly table, axes of the openings in both collectors are aligned. Then these collectors are heated up to the temperature of 600°C within 1 minute through heating with two parallel heaters in the furnaces. Between the furnaces, on the assembly table, there are vertical heating elements installed laterally in a position perpendicular to the collectors in the furnaces and collinearly to the axes of the openings milled in them. Vertical heating elements are cooled to the temperature of -195°C by being immersed in liquid nitrogen for the time from 2 seconds to 5 minutes. The horizontal collectors and vertical heating elements thus prepared are joined with the uniform motion of synchronized pneumatic cylinders, which move the heated collectors synchronously to each other and along the vertical heating elements. The constructed radiator is left to slowly cool down to the ambient temperature. The final finishing stage is subjecting the finished radiator to surface treatment by anodizing.

### Example: Embodiment III

In horizontal collectors of the cross section in the shape of a closed profile, openings of the diameter "d1" are linearly milled in one plane in even spaces. Vertical heating elements in the form of closed profiles are at opposite ends bored at the length "L1" to the dimension of the external diameter "d2" in such a way that d2> d1 and then bevelled at the length of "L2" in such a way that L2< L1. Horizontal collectors and vertical heating elements are subjected to surface treatment by anodizing before heating and cooling, whereby the horizontal collectors are heated up to the temperature of below 600°C with induction heaters within the time of 1 to 5 minutes. At the same time the vertical heating elements are cooled to the temperature of -195.8°C in the liquid gas environment, preferably liquid nitrogen. The horizontal collectors and vertical heating elements thus prepared are joined with the uniform motion of synchronized pneumatic cylinders, which move the heated collectors synchronously to each other and along the vertical heating elements. The joined elements in the form of a radiator are subjected to slow cooling down to the ambient temperature, and then they are subjected to surface treatment by anodizing.

## Claims

1. The method of construction of a radiator from aluminium and aluminium alloys by permanent joining of collectors with openings with heati1ng elements, **characterized by** that the collectors with openings, preferably horizontal, are heated to temperatures from 250°C to 600°C, and the heating elements, preferably vertical, are cooled to temperatures from -78.5°C to -195.8°C, whereas the end of the collectors heating is simultaneously the end of the heating elements cooling, and the temperature difference of the collectors heating and the heating elements cooling amounts at least to 328°C, then the heating elements are joined with the collectors and left for the temperature of the joined elements to level.

2. The method according to Claim 1, **characterized by** that the collectors prior to heating and the heating elements prior to cooling are subjected to surface treatment through anodizing.

3. The method according to Claim 1, **characterized by** that the cooling of the heating elements is conducted in the liquid gas environment, preferably liquid nitrogen, for at least 2 seconds.

4. The method according to Claim 1, **characterized by** that the assembled radiator is subjected to surface treatment through anodizing.

## Patentansprüche

1. Ausführungsweise eines Heizkörpers aus Aluminium und Aluminiumlegierungen mittels einer festen Verbindung von Kollektoren mit Öffnungen mit Heizelementen **dadurch gekennzeichnet, dass** die vorzugsweise horizontalen Kollektoren mit Öffnungen bis zur Temperatur von 250°C - 600°C aufgeheizt und die vorzugsweise vertikalen Heizelemente bis zur Temperatur von -78,5°C bis -195,8°C abgekühlt werden, wobei die Beendigung der Aufheizung von Kollektoren ebenfalls die Beendigung der Abkühlung von Heizelementen ist und die Temperaturdifferenz zwischen der Aufheizung von Kollektoren und der Abkühlung von Heizelementen mindestens 328°C beträgt, und anschließend die Heizelemente mit den Kollektoren verbunden werden und sind, bis die Temperatur der verbundenen Elemente ausgeglichen wird.

2. Ausführungsweise nach Anspruch 1 **dadurch gekennzeichnet, dass** die Kollektoren vor der Aufheizung und die Heizelemente vor der Abkühlung einer Oberflächenbehandlung durch Anodisieren unterworfen werden.

3. Ausführungsweise nach Anspruch 1 **dadurch gekennzeichnet, dass** die Abkühlung von Heizelementen in der Flüssiggas-Umgebung, vorzugsweise in der Flüssigstickstoff-Umgebung in mindestens 2 Sekunden erfolgt.

4. Ausführungsweise nach Anspruch 1 **dadurch gekennzeichnet, dass** der zusammengebaute Heizkörper einer Oberflächenbehandlung durch Anodisieren unterworfen wird.

## Revendications

1. La méthode de réalisation du radiateur en aluminium et en alliages d'aluminium par la liaison fixe des collecteurs perforés avec les éléments chauffants **caractérisée en ce que** les collecteurs perforés avantageusement horizontaux sont chauffés à température de 250°C à 600°C et les éléments chauffants avantageusement verticaux sont refroidis à température de -78,5°C à -195,8°C, la fin du chauffage des collecteurs correspondant à la fin de refroidissement des éléments chauffants et la différence de températures de chauffage des collecteurs et celles de refroidissement des éléments chauffants étant d'au moins 328° C, ensuite les éléments chauffants sont raccordés aux collecteurs et sont laissés pour que les températures des éléments raccordés soient similaires.

2. La méthode selon la revendication 1 **caractérisée en ce que** les collecteurs sont soumis au traitement de surface par anodisation avant le chauffage et les éléments chauffants sont soumis au traitement de surface par anodisation avant le refroidissement.

3. La méthode selon la revendication 1 **caractérisée en ce que** le refroidissement des éléments chauffants a lieu dans le milieu d'un gaz liquide, avantageusement de l'azote liquide, pendant au moins 2 secondes.

4. La méthode selon la revendication 1 **caractérisée en ce que** le radiateur monté est soumis au traitement de surface par anodisation.
